# EUROPÄISCHE PATENTSCHRIFT

(11) **EP 2 976 286 B1**
(45) Veröffentlichungstag und Bekanntmachung des Hinweises auf die Patenterteilung: **22.02.2017**
(21) Anmeldenummer: 14708530.2
(22) Anmeldetag: 04.03.2014
(51) Int. Cl.: B66C 23/20, B66C 23/36, B66C 23/62

(54) **SYSTEM UND VERFAHREN ZUM TRANSPORTIEREN UND PRÜFEN EINES ZUR VERWENDUNG BEI EINER OFFSHORE-WINDENERGIEANLAGE BESTIMMTEN KRANS**
SYSTEM AND METHOD FOR TRANSPORTING AND TESTING A CRANE INTENDED FOR USE IN AN OFFSHORE WIND TURBINE
SYSTÈME ET PROCÉDÉ POUR LE TRANSPORT ET LE TEST D'UNE GRUE DESTINÉE À ÊTRE UTILISÉE DANS UNE INSTALLATION ÉOLIENNE MARINE

(30) Priorität: 21.03.2013 DE 102013205030
(43) Veröffentlichungstag der Anmeldung: 27.01.2016
(73) Patentinhaber: Senvion GmbH, 22297 Hamburg (DE)
(72) Erfinder: WINTER, Martin, 28199 Bremen (DE); FRIEBE, Patrick, 22337 Hamburg (DE); REINHARDT, Daniel, 22307 Hamburg (DE); NIELSEN, Jens, 28309 Bremen (DE); OBERMÜLLER, Ronny, 18273 Güstrow (DE)
(74) Vertreter: Glawe, Delfs, Moll
(86) Internationale Anmeldenummer: PCT/EP2014/054159
(87) Internationale Veröffentlichungsnummer: WO 2014/146898

(56) Entgegenhaltungen:
- EP-A2- 2 383 219
- WO-A1-2012/039889
- GB-A- 2 487 230

## Beschreibung

Die Erfindung betrifft ein System und ein Verfahren zum Transportieren und Prüfen eines zur Verwendung bei einer Offshore-Windenergieanlage bestimmten Krans.

Offshore-Windenergieanlagen sind häufig mit einem Kran ausgestattet, der auf einer Arbeitsplattform am Fuß des Turms angeordnet ist. Der Kran dient dazu, kleinere Lasten bis zu einem Gewicht von beispielsweise einigen Tonnen von einem Schiff aufzunehmen und auf die Arbeitsplattform zu heben. Die GB 2487230 offenbart einen solchen Kran.

Beim Errichten der Offshore-Windenergieanlage wird bislang der Kran in Einzelteilen zum Ort der Windenergieanlage transportiert und dort zusammengesetzt. Anschließend erfolgt eine Prüfung des Krans, die einen Funktionstest, einen Lasttest und einen Überlasttest umfasst. Das auf diese Weise erfolgende Zusammensetzen und Prüfen des Krans ist zeitaufwändig und behindert den Ablauf beim Errichten der Offshore-Windenergieanlage.

Der Erfindung liegt die Aufgabe zu Grunde, ein Verfahren und ein System vorzustellen, mit denen beim Errichten einer Windenergieanlage Zeit und Kosten gespart werden können. Ausgehend vom genannten Stand der Technik wird die Aufgabe gelöst mit den Merkmalen der unabhängigen Ansprüche. Vorteilhafte Ausführungsformen finden sich in den Unteransprüchen.

Das erfindungsgemäße System umfasst einen Kran, einen Transportrahmen und ein Fundament. Es ist ein erster Verbindungsmechanismus vorgesehen zum Herstellen einer lösbaren Verbindung zwischen dem Kran und dem Transportrahmen sowie ein zweiter Verbindungsmechanismus zum Herstellen einer lösbaren Verbindung zwischen dem Transportrahmen und dem Fundament. Das System kann einen Ausgangszustand, einen Transportzustand und einen Prüfzustand einnehmen. Im Ausgangszustand liegen der Kran, der Transportrahmen und das Fundament separat voneinander vor. Der Kran kann im Ausgangszustand in Einzelteilen vorliegen oder zusammengesetzt sein. Im Transportzustand ist der Kran mit dem Transportrahmen verbunden. Im Prüfzustand ist der Kran mit dem Transportrahmen verbunden und der Transportrahmen ist mit dem Fundament verbunden.

Mit der Erfindung wird es möglich, den Kran an einem von der Windenergieanlage entfernten Ort zusammenzusetzen und zu prüfen. Beispielsweise kann dies im Hafenbereich erfolgen, wo die Komponenten der Windenergieanlage für den Transport zum Ort der Offshore-Windenergieanlage verladen werden. Dort kann der Kran ohne Zeitdruck und ohne Beeinträchtigung durch beispielsweise Wellengang aus den Einzelteilen zusammengesetzt werden, so dass der Kran im bereits funktionsfähigen Zustand über den ersten Verbindungsmechanismus mit dem Transportrahmen verbunden ist (Transportzustand). Auf dem Transportrahmen steht der Kran allerdings nicht so stabil, dass Lasttests und Überlasttests möglich wären. Das System wird in den Prüfzustand gebracht, indem über den zweiten Verbindungsmechanismus eine Verbindung zwischen dem Transportrahmen und dem Fundament hergestellt wird. Über das Fundament ist der Kran so stabil aufgestellt, dass Lasttests und Überlasttests möglich sind. Das Fundament zeichnet sich dadurch aus, dass es die bei den Tests auftretenden Lasten aufnehmen kann. Der Begriff ist nicht einschränkend im konstruktiven Sinne zu verstehen. Das Fundament kann beispielsweise eine in den Boden eingelassene Betonkonstruktion sein. Es können auch bereits vorhandene Verankerungspunkte genutzt werden, beispielsweise in Form von im Boden eingelassenen Schienen, wie sie häufig im Hafenbereich anzufinden sind. Möglich ist auch ein auf dem Boden stehendes Gestell von hinreichender Stabilität. Nachdem der Kran bereits zusammengesetzt und geprüft ist, erfordert die Montage bei der Windenergieanlage nur noch geringen Aufwand.

Der Kran kann einen Anschlussflansch aufweisen, über den der Kran an der Arbeitsplattform der Windenergieanlage befestigt wird. Vorzugsweise ist der Transportrahmen mit einem Gegenstück zu dem Anschlussflansch ausgestattet, so dass der Kran über den Anschlussflansch mit dem Transportrahmen verbunden werden kann. Der Anschlussflansch und das Gegenstück bilden zusammen den ersten Verbindungsmechanismus. Der erste Verbindungsmechanismus ist vorzugsweise so gestaltet, dass er gegenüber Kräften aus allen Richtungen stabil ist. Beispielsweise kann der erste Verbindungsmechanismus Bolzen aufweisen, die durch Bohrungen in dem Anschlussflansch hindurchgeführt werden, um den Anschlussflansch gegen das Gegenstück zu spannen.

Das dem Transportrahmen zugeordnete Gegenstück kann an einem Adapterteil ausgebildet sein. Das Adapterteil umfasst einen Anschluss für eine Verbindung mit der Struktur des Transportrahmens sowie das Gegenstück für den Anschlussflansch des Krans. Wenn das Gegenstück an einem Adapterteil ausgebildet ist, kann der Transportrahmen durch einfachen Austausch des Adapterteils für unterschiedliche Typen von Kränen verwendet werden. Vorzugsweise umfasst das erfindungsgemäße System einen Satz von Adapterteilen, wobei die Adapterteile unterschiedliche Gegenstücke zur Verbindung mit unterschiedlichen Typen von Kränen aufweisen.

Bei den Lasttests und Überlasttests, die durchgeführt werden, wenn der Kran und der Transportrahmen mit dem Fundament verbunden sind, wirken definierte Kräfte auf das System, deren Richtung und Größe bekannt sind. Der zweite Verbindungsmechanismus, über den der Transportrahmen mit dem Fundament verbunden ist, ist gegenüber diesen Kräften stabil. Der zweite Verbindungsmechanismus kann so gestaltet sein, dass er sich löst, wenn zwischen dem Transportrahmen und dem Fundament eine Kraft aus einer anderen Richtung wirkt. Die beim Prüfen des Krans auftretenden Kräfte sind regelmäßig solche, die nach unten wirken oder die ein Kippmoment auf das Fundament ausüben. Der zweite Verbindungsmechanismus kann so ausgelegt sein, dass er sich löst, wenn eine im Wesentlichen nach oben gerichtete Kraft auf den Transportrahmen wirkt. Der zweite Verbindungsmechanismus kann außerdem so ausgelegt sein, dass er automatisch verriegelt, wenn der Transportrahmen von oben auf das Fundament aufgesetzt wird.

Beispielsweise kann der zweite Verbindungsmechanismus eine Halteöffnung und einen zu der Halteöffnung passenden Haltevorsprung umfassen. Die Halteöffnung kann mit einer Hinterschneidung versehen sein, die im Prüfzustand von dem Haltevorsprung hintergriffen wird. Diese Art Verbindungsmechanismus ist bekannt von Containern, die auf Schiffe verladen und dort verriegelt werden. In einer halbautomatischen Form, bei der die Verriegelung beim Aufsetzen automatisch erfolgt, während zum Entriegeln eine manuelle Betätigung erforderlich ist, wird der Verriegelungsmechanismus als Twistlock bezeichnet. In einer automatischen Form, bei der sowohl das Verriegeln beim Aufsetzen als auch das Entriegeln beim Abheben automatisch erfolgt, wird der Verriegelungsmechanismus als Quick Tie bezeichnet.

Der zweite Verbindungsmechanismus kann eine Mehrzahl von Halteöffnungen umfassen, wobei vorzugsweise mindestens vier Halteöffnungen vorgesehen sind. Die vier Halteöffnungen können so angeordnet sein, dass sie die Ecken eines gedachten Rechtecks bilden. Der Anschlussflansch des Krans kann im Prüfzustand innerhalb des Rechtecks angeordnet sein. Weiter vorzugsweise bilden die vier Halteöffnungen die Ecken eines gedachten Quadrats und der Anschlussflansch ist mittig zwischen den Halteöffnungen angeordnet. Der zweite Verbindungsmechanismus kann so gestaltet sein, dass die Haltevorsprünge an dem Transportrahmen und die Halteöffnungen an dem Fundament angeordnet sind. Bevorzugt ist die umgekehrte Anordnung, bei der die Halteöffnungen an dem Transportrahmen und die Haltevorsprünge an dem Fundament angeordnet sind.

Der Transportrahmen kann eine das Gegenstück umgebende Wanne aufweisen, so dass Betriebsstoffe, die bei einem Leck aus dem Kran austreten können, sich in der Wanne sammeln. In einer vorteilhaften Ausführungsform erstreckt sich die Wanne über den zwischen den Halteöffnungen eingeschlossenen Bereich des Transportrahmens. Innerhalb der Wanne können Streben ausgebildet sein, die der Stabilität des Transportrahmens dienen. Auch das Gegenstück für den Anschlussflansch des Krans kann im Bereich der Wanne angeordnet sein. Die Wanne kann mit einer verschließbaren Ablassöffnung versehen sein, durch die in der Wanne gesammelte Flüssigkeiten abgelassen werden können.

Der Transportrahmen kann außerdem eine neben der Wanne angeordnete Ablagefläche aufweisen. Auf der Ablagefläche kann Zubehör abgelegt werden. Die Ablagefläche ist vorzugsweise so gestaltet, dass Flüssigkeit nach unten abläuft. Das System kann dann im Transportzustand im Freien gelagert werden, ohne dass das Zubehör Schaden durch sich sammelnden Regen nimmt. Im Transportzustand ist der Ausleger des Krans vorzugsweise in Richtung der Ablagefläche ausgerichtet.

Die Ablagefläche kann weitere Halteöffnungen aufweisen, die mit zwei Halteöffnungen des zweiten Verbindungsmechanismus ein Rechteck einschließen. Das Rechteck kann einem Standardmaß entsprechen, so dass der Transportrahmen leicht auf einem Anhänger mit standardisierten Haltevorsprüngen befestigt werden kann.

Für den Transportrahmen kann außerdem ein Abdeckgestell vorgesehen sein, das im Transportzustand die Kontur des Krans einschließt. Dies bedeutet, dass nach oben hin keine Elemente des Krans über das Abdeckgestell hinausragen. Zur Seite hin ragt vorzugsweise lediglich der in eine im Wesentlichen waagerechte Position gebrachte Ausleger des Krans über das Abdeckgestell hinaus. Außerdem kann die Ablagefläche des Transportrahmens über die mit dem Abdeckgestell eingeschlossene Kontur hinausragen. Durch das Abdeckgestell wird es möglich, mehrere im Transportzustand befindliche Transportrahmen übereinander zu stapeln. Im gestapelten Zustand liegt der obere Transportrahmen auf dem Abdeckgestell des unteren Transportrahmens auf. Für den Transport bzw. für die Lagerung unterschiedlicher Typen von Kränen können zwecks Optimierung des Platzbedarfs unterschiedlich hohe Abdeckgestelle vorgesehen werden. Das erfindungsgemäße System kann also einen Satz aus einer Mehrzahl von Abdeckgestellen umfassen, wobei die Abdeckgestelle in der Höhe unterschiedliche Abmessungen haben.

Da das Abdeckgestell beim Prüfen des Krans hinderlich wäre, ist das Abdeckgestell vorzugsweise lösbar mit der Struktur des Transportrahmens verbunden. Wie beim zweiten Verbindungsmechanismus kann die Verbindung über Halteöffnungen und dazu passende Haltevorsprünge erfolgen. Vorzugsweise sind die Haltevorsprünge an dem Abdeckgestell und die Halteöffnungen an der Struktur des Transportrahmens ausgebildet. Zur Verbindung gestapelter Transportrahmen können am oberen Ende des Abdeckgestells weitere Haltevorsprünge vorgesehen sein, die so angeordnet sind, dass sie mit den Halteöffnungen des zweiten Verbindungsmechanismus des oberen Transportrahmens verriegeln können. Die Haltevorsprünge sind ein Beispiel für ein Verbindungselement im Sinne der Erfindung.

Die Erfindung betrifft außerdem ein Verfahren zum Transportieren und Prüfen eines Krans, der zur Verwendung bei einer Offshore-Windenergieanlage bestimmt ist. Bei dem Verfahren wird ein Kran mit einem Transportrahmen verbunden. In diesem Transportzustand kann die Einheit aus dem Kran und dem Transportrahmen zu einem Fundament transportiert werden. Zum Prüfen des Krans wird der Transportrahmen mit dem Fundament verbunden. In diesem Zustand wird ein Lasttest mit dem Kran durchgeführt.

Bei dem Verfahren wird der Kran vorzugsweise in Einzelteilen zu einem Montageort gebracht. Am Montageort wird der Kran zusammengesetzt und mit dem Transportrahmen verbunden. Dabei ist es unerheblich, ob zunächst der Kran als Ganzes zusammengesetzt wird und dann mit dem Transportrahmen verbunden wird oder ob bereits während des Zusammensetzens Einzelteile des Krans mit dem Transportrahmen verbunden werden. Wenn der Kran zusammengesetzt und mit dem Transportrahmen verbunden ist, steht der Kran stabil, solange er unbelastet ist. Es ist also eine Lagerung oder ein Transport möglich.

Der Montageort ist vorzugsweise so gewählt, dass beim Transport zu der Windenergieanlage keine öffentlichen Straßen mehr genutzt werden müssen. Aufgrund der Größe des Krans wäre auf öffentlichen Straßen ein Sondertransport erforderlich. Außerdem würde es sich aufgrund der in dem Kran enthaltenen Betriebsstoffe um einen Gefahrguttransport handeln. Beispielsweise kann die Montage im Bereich eines Hafens erfolgen, so dass die Einheit aus Kran und Transportrahmen direkt auf ein Schiff verladen werden kann.

Vor dem weiteren Transport wird der Kran geprüft und es werden Funktionstests sowie Lasttests bzw. Überlasttests durchgeführt. Zu diesem Zweck wird der Transportrahmen mit einem Fundament verbunden, das so ausgelegt ist, dass es die bei den Tests auftretenden Lasten aufnehmen kann. Sollte der Kran fehlerhaft sein, kann der Fehler am Montageort wesentlich leichter behoben werden als in der Offshore-Umgebung der Windenergieanlage.

Nach erfolgreichem Abschluss der Tests kann eine Lagerung erfolgen. Das System bleibt während der Lagerung im Transportzustand, in dem der Kran auf dem Transportrahmen steht. Ist der Transportrahmen mit einem die Kontur des Krans einschließenden Abdeckgestell versehen, können mehrere im Transportzustand befindliche Transportrahmen gestapelt werden. Für den anschließenden Transport zur Windenergieanlage wird die Einheit aus Kran und Transportrahmen verladen. Bei der Windenergieanlage wird der Kran von dem Transportrahmen gelöst und auf einer Arbeitsplattform der Windenergieanlage angebracht. Nach einer abschließenden Funktionsüberprüfung kann der Kran in Betrieb genommen werden.

Nachdem der Kran von dem Transportrahmen gelöst wurde, können mehrere Transportrahmen platzsparend gestapelt werden. Vorzugsweise wird das Abdeckgestell vor dem Stapeln von dem Transportrahmen gelöst.

Das Verfahren kann mit weiteren Merkmalen fortgebildet werden, die mit Bezug auf das erfindungsgemäße System beschrieben sind.

Die Erfindung wird nachfolgend unter Bezugnahme auf die beigefügten Zeichnungen anhand vorteilhafter Ausführungsform beispielhaft beschrieben. Es zeigen:
- Fig. 1:: eine schematische Darstellung eines erfindungsgemäßen Systems;
- Fig. 2:: eine Draufsicht auf einen Transportrahmen;
- Fig. 3:: eine Einheit aus einem Kran und einem Transportrahmen im Transportzustand;
- Fig. 4:: die Einheit aus Fig. 3 in einem anderen Zustand;
- Fig. 5:: die Einheit aus Fig. 3 in einem weiteren Zustand;
- Fig.6 A/B:: einen Satz von zwei Adapterplatten; und
- Fig. 7:: eine Offshore-Windenergieanlage mit einem Kran.

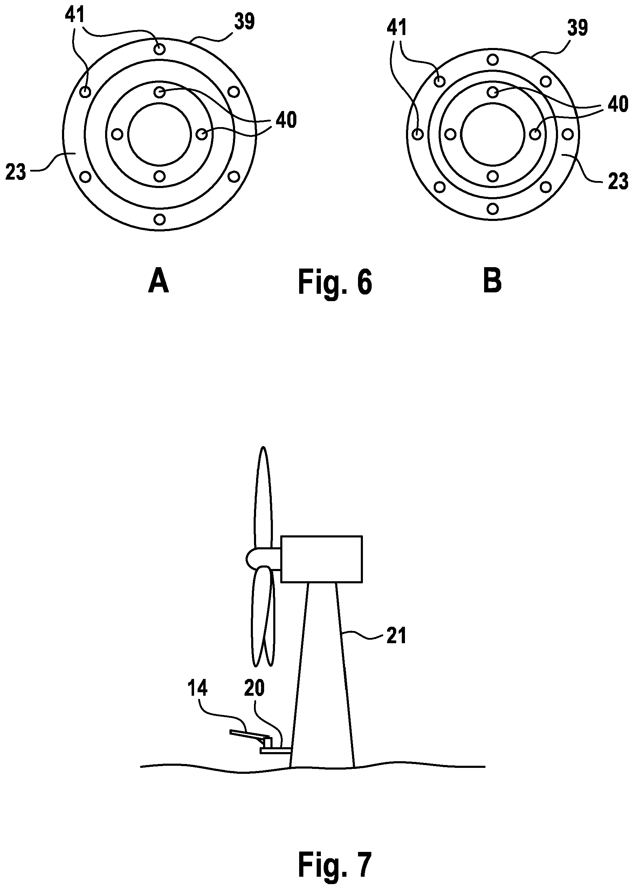

Ein Kran 14 ist gemäß Fig. 7 dazu bestimmt, auf einer Arbeitsplattform 20 einer Offshore-Windenergieanlage 21 eingesetzt zu werden. Dort dient der Kran 14 dazu, kleinere Lasten bis zu einem Gewicht von beispielsweise einigen Tonnen von einem Schiff aufzunehmen und auf die Arbeitsplattform 20 zu heben.

Der mit einem Ausleger 37 versehene Kran 14 überschreitet die für einen normalen Straßentransport zulässigen Maße, weswegen der Kran 14 üblicherweise nicht im Werk zusammengesetzt wird, sondern in Einzelteilen ausgeliefert wird. Da bei der Offshore-Windenergieanlage 21 ungünstige Bedingungen für das Zusammensetzen des Krans 14 herrschen, ist bei der Erfindung vorgesehen, den Kran 14 an einem von der Windenergieanlage 21 entfernten Montageort aus den Einzelteilen zusammenzusetzen. Der Montageort wird vorzugsweise so gewählt, dass zwischen dem Montageort und der Windenergieanlage 21 kein Transport mehr über öffentliche Straßen erforderlich ist. Der Montageort kann beispielsweise in einem Hafenbereich sein, so dass der fertig montierte Kran 14 direkt auf ein Schiff verladen werden kann, mit dem er zu der Offshore-Windenergieanlage 21 transportiert wird.

Der Kran 14 ist so konstruiert, dass er über einen Anschlussflansch 22 verankert werden muss, damit er aufrecht steht. Um den Kran 14 beim Zusammensetzen und beim Transport im aufrechten Zustand zu halten, ist ein Transportrahmen 15 vorgesehen. Der Transportrahmen 15 hat ein zu dem Anschlussflansch 22 des Krans 14 passendes Gegenstück 23. Mit einer Mehrzahl von über den Umfang verteilten Schraubbolzen (nicht dargestellt) wird der Anschlussflansch 22 an dem Gegenstück 23 befestigt. Der Anschlussflansch 22 und das Gegenstück 23 bilden zusammen einen ersten Verbindungsmechanismus 22, 23 im Sinne der Erfindung.

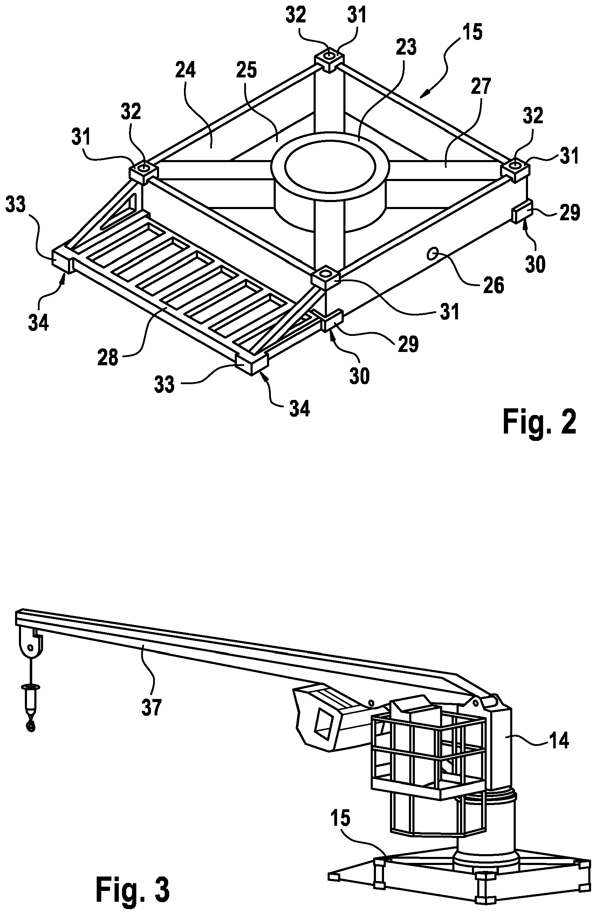

In dem Beispiel der Fig. 2 ist das Gegenstück 23 genau an den Anschlussflansch 22 des Krans 14 angepasst. Das Gegenstück 23 kann also nicht mit anderen Typen von Kränen verwendet werden, bei denen der Anschlussflansch anders gestaltet ist. Um den Transportrahmen 15 auch mit anderen Arten von Kränen verwenden zu können, können Adapterplatten 39 vorgesehen sein, wie sie in Fig. 6 gezeigt sind. Die Adapterplatten 39 haben einen inneren Kranz von Bohrungen 40, der bei den beiden Adapterplatten 39 übereinstimmend ausgebildet ist. Über die Bohrungen 40 kann die Adapterplatte 39 mit dem Transportrahmen 15 verbunden werden. Der äußere Kranz von Bohrungen 41 bildet das Gegenstück 23, über das die Verbindung mit dem Anschlussflansch 22 des Krans 14 hergestellt wird. Bei der links dargestellten Adapterplatte 39 (Abbildung A) hat das Gegenstück 23 einen größeren Kranzdurchmesser mit sechs Bohrungen 41. In der linken Abbildung B hat das Gegenstück 23 einen kleineren Kranzdurchmesser und acht Bohrungen 41. Durch Auswahl einer geeigneten Adapterplatte 39 können unterschiedliche Typen von Kränen mit dem Transportrahmen 15 verbunden werden.

Der Transportrahmen 15 hat gemäß Fig. 2 eine quadratische Grundform, wobei sich jeweils zwischen benachbarten Ecken eine senkrechte Seitenwand 24 erstreckt. Die zwischen den Seitenwänden 24 eingeschlossene Fläche ist nach unten hin durch einen Boden 25 abgeschlossen. Die aus den Seitenwänden 24 und dem Boden 25 gebildete Wanne ist dicht, so dass Flüssigkeiten in der Wanne gehalten werden. Die Wanne 24, 25 ist mit einer Ablauföffnung 26 versehen, durch die die Flüssigkeiten abgelassen werden können.

Zum Stabilisieren des Gegenstücks 23 erstreckt sich von jeder Ecke eine Strebe 27 zu dem Gegenstück 23. An eine der Seitenwände 24 schließt sich eine Ablagefläche 28 an, die einen durchbrochen Boden aufweist. Auf der Ablagefläche 28 kann Zubehör gelagert werden.

Der Transportrahmen 15 ist mit vier Beschlägen 29 ausgestattet, die an den unteren Ecken des Transportrahmens 15 angeordnet sind. Die Beschläge 29 sind mit nach unten weisenden Halteöffnungen 30 ausgestattet, die in Fig. 2 nicht sichtbar sind. Die Beschläge 29 entsprechen den Beschlägen bei Standard-Containern aus der Schifffahrt.

An seinen vier oberen Ecken hat der Transportrahmen 15 vier entsprechend geformte Beschläge 31, die mit Halteöffnungen 32 versehen sind. Zwei weitere Beschläge 33 mit nach unten weisenden Halteöffnungen 34 sind an den beiden äußeren Ecken der Ablagefläche 28 angeordnet. Die Beschläge 33 der Ablagefläche 28 können verwendet werden, um den Transportrahmen 15 beim Transport auf einem Schiff oder einem Anhänger zu befestigen.

Nach dem Zusammensetzen des Krans 14 aus den Einzelteilen bildet der Kran 14 zusammen mit dem Transportgestell 15 eine Einheit, wie sie in Fig. 3 dargestellt ist. Die Einheit ist im Transportzustand. Der Kran 14 steht stabil aufrecht und der Ausleger 37 ist in Richtung der Ablagefläche 28 ausgerichtet. Wenn der Kran 14 in aufrechter Position steht, bleiben die Betriebsflüssigkeiten in dem Kran 14. Der Kran 14 kann abgestellt und gelagert werden. Laufen nach einem Leck in dem Kran 14 Betriebsflüssigkeiten aus, sammeln diese sich in der Wanne 24, 25 des Transportrahmens 15. Ein Umweltschaden durch die Betriebsflüssigkeiten ist ausgeschlossen.

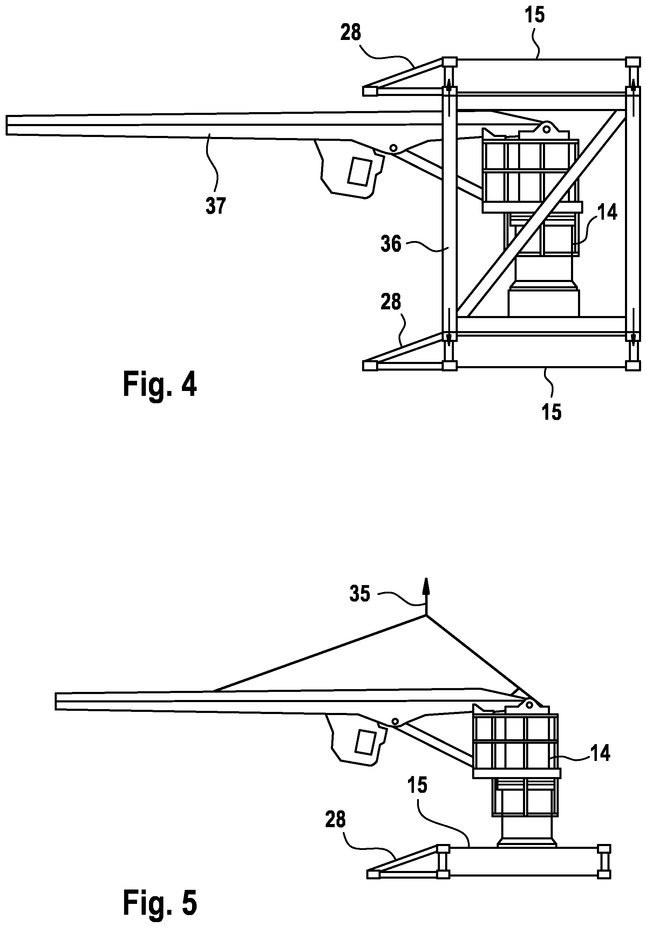

Um den Transportrahmen 15 mit dem Kran 14 zu verladen oder an einen anderen Ort zu versetzen, ist ein nicht dargestellter Hubkran erforderlich, der in Fig. 5 durch Bezugszeichen 35 angedeutet ist.

Gemäß Fig. 4 ist für den Transportrahmen 15 außerdem ein Abdeckgestell 36 vorgesehen. Das Abdeckgestell 36 ist an seinen unteren vier Ecken mit nicht sichtbaren Haltevorsprüngen ausgestattet, die in die Halteöffnungen 32 der Beschläge 31 des Transportrahmens 15 eingreifen, um das Abdeckgestell 36 mit dem Transportrahmen 15 zu verbinden. Das Abdeckgestell 36 ist so bemessen, dass es die Kontur des Krans 14 einschließt. Lediglich der Ausleger 37 des Krans 14 ragt in seitlicher Richtung über das Abdeckgestell 36 hinaus.

An seinen oberen vier Ecken ist das Abdeckgestell 36 mit nach oben weisenden Haltevorsprüngen versehen, die ebenfalls in Fig. 4 nicht sichtbar sind. Wird ein zweiter Transportrahmen 15 von oben auf das Abdeckgestell 36 aufgesetzt, greifen die Haltevorsprünge in die Halteöffnungen 30 der Beschläge 29 des zweiten Transportrahmens 15 ein. Der zweite Transportrahmen 15 steht dann in einer festen Verbindung mit dem Abdeckgestell 36. Auf diese Weise können mehrere Transportrahmen 15 mit Kran 14 übereinander gestapelt werden. Dies spart Raum bei der Zwischenlagerung der Krane 14 im Hafenbereich und/oder beim Seetransport zur Offshore-Windenergieanlage 21.

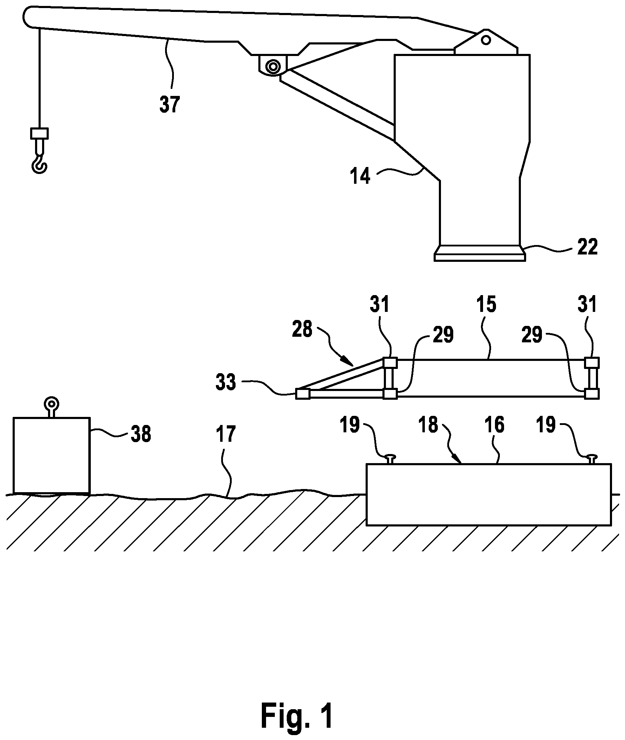

Der Transportrahmen 15 ist so bemessen, dass der Kran 14 stabil aufrecht steht, solange er nicht unter Last ist. Funktionstests, bei denen der Ausleger 37 belastet wird, sind nicht möglich, wenn der Kran 14 auf dem Transportrahmen 15 steht. Um dennoch Lasttests und Überlasttests mit dem Kran 14 durchführen zu können, umfasst das erfindungsgemäße System außer dem Kran 14 und dem Transportrahmen 15 ein Fundament 16, das in Fig. 1 dargestellt ist.

Das Fundament 16 ist fest im Boden 17 verankert. In einer Ansicht von oben ist das Fundament 16 quadratisch. Auf seiner Oberseite hat das Fundament 16 eine ebene Fläche 18. Das Fundament 16 umfasst vier Haltevorsprünge 19, die nahe den vier Ecken des Fundaments angeordnet sind und gegenüber der Fläche 18 nach oben vorspringen. Der Abstand zwischen den Haltevorsprüngen 19 entspricht dem Abstand der Beschläge 29 des Transportrahmens 15.

Wird der Transportrahmen 15 von oben auf das Fundament 16 aufgesetzt, greifen die Haltevorsprünge 19 in die Halteöffnungen 30 der Beschläge 29 ein und verriegeln den Transportrahmen 15 gegenüber dem Fundament 16. Die Haltevorsprünge 19 und die Beschläge 29 bilden zusammen einen zweiten Verbindungsmechanismus im Sinne der Erfindung.

In diesem Zustand, der im Sinne der Erfindung als Prüfzustand bezeichnet wird, kann der Kran 14 mit einer Last 38 belastet werden, ohne dass er umkippt. Das durch die Last 38 ausgeübte Kippmoment wird über die Beschläge 29 und die Haltevorsprünge 19 in das Fundament 16 übergeleitet. Nach Abschluss der Lasttests und Überlasttests wird der Kran 14 mit dem Transportrahmen 15 nach oben abgehoben. Unter einer im Wesentlichen nach oben gerichteten Kraft lösen sich die Beschläge 29 selbsttätig von den Haltevorsprüngen 19.

## Patentansprüche

1. System zum Transportieren und Prüfen eines zur Verwendung bei einer Offshore-Windenergieanlage (21) bestimmten Krans (14), umfassend einen Kran (14), einen Transportrahmen (15) und ein Fundament (16), mit einem ersten Verbindungsmechanismus (22, 23) zum Herstellen einer lösbaren Verbindung zwischen dem Kran (14) und dem Transportrahmen (15) sowie mit einem zweiten Verbindungsmechanismus (19, 29) zum Herstellen einer lösbaren Verbindung zwischen dem Transportrahmen (15) und dem Fundament (16), wobei das System für folgende Zustände ausgelegt ist:
a. einen Ausgangszustand, in dem der Kran (14), der Transportrahmen (15) und das Fundament (16) separat voneinander vorliegen;
b. einen Transportzustand, in dem der Kran (14) mit dem Transportrahmen (15) verbunden ist; und
c. einen Prüfzustand, in dem der Kran mit dem Transportrahmen (15) verbunden ist und in dem der Transportrahmen (15) mit dem Fundament (16) verbunden ist.

2. System nach Anspruch 1, **dadurch gekennzeichnet, dass** der erste Verbindungsmechanismus (22, 23) einen an dem Kran (14) ausgebildeten Anschlussflansch (22) und ein dem Transportrahmen zugeordnetes Gegenstück (23) umfasst.

3. System nach Anspruch 2, **dadurch gekennzeichnet, dass** der Transportrahmen (15) ein Adapterteil (39) aufweist und dass das Gegenstück (23) an dem Adapterteil (39) angeordnet ist.

4. System nach Anspruch 3, **gekennzeichnet durch** einen Satz von Adapterteilen (39), wobei die Adapterteile (39) unterschiedliche Gegenstücke (23) zur Verbindung mit unterschiedlichen Typen von Kränen aufweisen.

5. System nach einem der Ansprüche 1 bis 4, **dadurch gekennzeichnet, dass** der zweite Verbindungsmechanismus (19, 29) gegenüber Kippmomenten stabil ist und dass der zweite Verbindungsmechanismus (19, 29) sich löst, wenn zwischen dem Transportrahmen (15) und dem Fundament (16) eine im Wesentlichen nach oben gerichtete Kraft wirkt.

6. System nach einem der Ansprüche 1 bis 5, **dadurch gekennzeichnet, dass** der zweite Verbindungsmechanismus (19, 29) eine Halteöffnung (30) und einen zu der Halteöffnung (30) passenden Haltevorsprung (19) umfasst und dass im Prüfzustand der Haltevorsprung (19) die Halteöffnung (30) hintergreift.

7. System nach einem der Ansprüche 2 bis 6, **dadurch gekennzeichnet, dass** der Transportrahmen (15) eine das Gegenstück (23) umgebende Wanne (24, 25) aufweist.

8. System nach Anspruch 7, **dadurch gekennzeichnet, dass** der Transportrahmen (15) mit einer neben der Wanne (24, 25) angeordneten Ablagefläche (28) ausgestattet ist.

9. System nach Anspruch 8, **dadurch gekennzeichnet, dass** im Transportzustand der Ausleger (37) des Krans (14) in Richtung der Ablagefläche (28) ausgerichtet ist.

10. System nach einem der Ansprüche 1 bis 9, **dadurch gekennzeichnet, dass** ein Abdeckgestell (36) für den Transportrahmen (15) umfasst ist und dass das Abdeckgestell (36) im Transportzustand die Kontur des Krans (14) einschließt.

11. System nach Anspruch 10, **dadurch gekennzeichnet, dass** das Abdeckgestell (36) an seinem oberen Ende ein Verbindungselement zum Herstellen einer Verbindung mit einem zweiten Transportrahmen (15) aufweist.

12. System nach Anspruch 10 oder 11, **dadurch gekennzeichnet, dass** das Abdeckgestell (36) lösbar mit dem Transportrahmen (15) verbunden ist.

13. Verfahren zum Transportieren und Prüfen eines zur Verwendung bei einer Offshore-Windenergieanlage (21) bestimmten Krans (14) mit folgenden Schritten:
a. Verbinden des Krans (14) mit einem Transportrahmen (15) ;
b. Verbinden des Transportrahmens (15) mit einem Fundament (16);
c. Durchführen eines Lasttests mit dem Kran (14).

14. Verfahren nach Anspruch 13, **dadurch gekennzeichnet, dass** der Transportrahmen (15) mit einem die Kontur des Krans (14) einschließenden Abdeckgestell (36) versehen wird und dass ein weiterer Transportrahmen (15) auf das Abdeckgestell (36) gestapelt wird.

## Claims

1. A system for transporting and testing a crane (14) intended for use in an offshore wind turbine (21), comprising a crane (14), a shipping frame (15), and a foundation (16), having a first connection mechanism (22, 23) for establishing a releasable connection between the crane (14) and the shipping frame (15), and having a second connection mechanism (19, 29) for establishing a releasable connection between the shipping frame (15) and the foundation (16), wherein the system is conceived for the following states:
a. an initial state in which the crane (14), the shipping frame (15), and the foundation (16) are provided so as to be separate from one another;
b. a shipping state in which the crane (14) is connected to the shipping frame (15); and
c. a testing state in which the crane is connected to the shipping frame (15), and in which the shipping frame (15) is connected to the foundation (16).

2. System according to Claim 1, **characterized in that** the first connection mechanism (22, 23) comprises a connector flange (22) which is configured on the crane (14), and a counterpiece (23) which is assigned to the shipping frame.

3. System according to Claim 2, **characterized in that** the shipping frame (15) has an adaptor part (39), and **in that** the counterpiece (23) is disposed on the adaptor part (39).

4. System according to Claim 3, **characterized by** a set of adaptor parts (39), wherein the adaptor parts (39) have various counterpieces (23) for connecting to various types of cranes.

5. System according to one of Claims 1 to 4, **characterized in that** the second connection mechanism (19, 29) is stable in relation to moments of tilt, and **in that** the second connection mechanism (19, 29) is released when a force which is substantially oriented upward acts between the shipping frame (15) and the foundation (16).

6. System according to one of Claims 1 to 5, **characterized in that** the second connection mechanism (19, 29) comprises a retaining opening (30) and a retaining protrusion (19) which matches the retaining opening (30), and **in that** in the testing state the retaining protrusion (19) engages behind the retaining opening (30).

7. System according to one of Claims 2 to 6, **characterized in that** the shipping frame (15) has a pan (24, 25) which surrounds the counterpiece (23).

8. System according to Claim 7, **characterized in that** the shipping frame (15) is equipped with a rack face (28) which is disposed beside the pan (24, 25).

9. System according to Claim 8, **characterized in that** the outrigger (37) of the crane (14) in the shipping state is oriented toward the rack face (28).

10. System according to one of Claims 1 to 9, **characterized in that** a cover frame (36) for the shipping frame (15) is comprised therein, and **in that** the cover frame (36) in the shipping state encases the contour of the crane (14).

11. System according to Claim 10, **characterized in that** the cover frame (36) at the upper end thereof has a connection element for establishing a connection to a second shipping frame (15).

12. System according to Claim 10 or 11, **characterized in that** the cover frame (36) is releasably connected to the shipping frame (15).

13. Method for transporting and testing a crane (14) intended for use in an offshore wind turbine (21), the method comprising the following steps:
a. connecting the crane (14) to a shipping frame (15) ;
b. connecting the shipping frame (15) to a foundation (16);
c. performing a load test with the crane (14).

14. Method according to Claim 13, **characterized in that** the shipping frame (15) is provided with a cover frame (36) which encases the contour of the crane (14), and **in that** a further shipping frame (15) is stacked on top of the cover frame (36).

## Revendications

1. Système pour le transport et le contrôle d'une grue (14) destinée à être utilisée sur une éolienne offshore (21), comprenant une grue (14), un châssis de transport (15) et une embase (16), avec un premier mécanisme de liaison (22, 23) pour l'établissement d'une liaison amovible entre la grue (14) et le châssis de transport (15) et avec un deuxième mécanisme de liaison (19, 29) pour l'établissement d'une liaison amovible entre le châssis de transport (15) et l'embase (16), le système étant conçu pour les états suivants :
a. un état initial dans lequel la grue (14), le châssis de transport (15) et l'embase (16) sont séparés les uns des autres ;
b. un état de transport dans lequel la grue (14) est reliée avec le châssis de transport (15) ; et
c. un état de contrôle dans lequel la grue est reliée avec le châssis de transport (15) et dans lequel le châssis de transport (15) est relié avec l'embase (16).

2. Système selon la revendication 1, **caractérisé en ce que** le premier mécanisme de liaison (22, 23) comprend une bride de raccordement (22) réalisée sur la grue (14) et une contre-pièce (23) correspondant au châssis de transport.

3. Système selon la revendication 2, **caractérisé en ce que** le châssis de transport (15) comprend une partie d'adaptation (39) et **en ce que** la contre-pièce (23) est disposée sur la partie d'adaptation (39).

4. Système selon la revendication 3, **caractérisé par** un ensemble de pièces d'adaptation (39), les pièces d'adaptation (39) comprenant différentes contre-pièces (23) pour une liaison avec différents type de grues.

5. Système selon l'une des revendications 1 à 4, **caractérisé en ce que** le deuxième mécanisme de liaison (19, 29) est stable vis-à-vis des couples de basculement et **en ce que** le deuxième mécanisme de liaison (19, 29) se détache lorsque, entre le châssis de transport (15) et l'embase (16), une force, orientée globalement vers le haut, est appliquée.

6. Système selon l'une des revendications 1 à 5, **caractérisé en ce que** le deuxième mécanisme de liaison (19, 29) comprend une ouverture de maintien (30) et une saillie de maintien (19) adaptée à l'ouverture de maintien (30) et **en ce que**, dans l'état de contrôle, la saillie de maintien (19) s'emboîte par l'arrière avec l'ouverture de maintien (30).

7. Système selon l'une des revendications 2 à 6, **caractérisé en ce que** le châssis de transport (15) comprend un bac (24, 25) entourant la contre-pièce (23).

8. Système selon la revendication 7, **caractérisé en ce que** le châssis de transport (15) est équipé d'une surface de pose (28) disposée à côté du bac (24, 25).

9. Système selon la revendication 8, **caractérisé en ce que**, dans l'état de transport, la flèche (37) de la grue (14) est orientée dans la direction de la surface de pose (28).

10. Système selon l'une des revendications 1 à 9, **caractérisé en ce qu'**un bâti de recouvrement (36) pour le châssis de transport (15) est inclus et **en ce que** le bâti de recouvrement (36) englobe, dans l'état de transport, le contour de la grue (14).

11. Système selon la revendication 10, **caractérisé en ce que** le bâti de recouvrement (36) comprend, au niveau de son extrémité supérieure, un élément de liaison pour l'établissement d'une liaison avec un deuxième châssis de transport (15).

12. Système selon la revendication 10 ou 11, **caractérisé en ce que** le bâti de recouvrement (36) est relié de manière amovible avec le châssis de transport (15).

13. Procédé de transport et de contrôle d'une grue (14) destinée à être utilisée pour une éolienne offshore (21), avec les étapes suivantes :
a. liaison de la grue (14) avec un châssis de transport (15) ;
b. liaison du châssis de transport (15) avec une embase (16) ;
c. réalisation d'un test de charge avec la grue (14).

14. Procédé selon la revendication 13, **caractérisé en ce que** le châssis de transport (15) est muni d'un bâti de recouvrement (36) englobant le contour de la grue (14) et **en ce qu'**un autre châssis de transport (15) est empilé sur le bâti de recouvrement (36).
